Europäisches Patentamt

European Patent Office

Office européen des brevets

(11) Veröffentlichungsnummer : **0 340 156 B1**

# (12) EUROPÄISCHE PATENTSCHRIFT

(45) Veröffentlichungstag der Patentschrift :
15.01.92 Patentblatt 92/03

(51) Int. Cl.⁵ : **F01M 1/06,** F01M 1/02

(21) Anmeldenummer : **89810114.2**

(22) Anmeldetag : **13.02.89**

(54) Schmieranordnung für das Kreuzkopflager einer Zweitakt-Kolbenbrennkraftmaschine.

(30) Priorität : **27.04.88 CH 1579/88**

(43) Veröffentlichungstag der Anmeldung :
**02.11.89 Patentblatt 89/44**

(45) Bekanntmachung des Hinweises auf die
Patenterteilung :
**15.01.92 Patentblatt 92/03**

(84) Benannte Vertragsstaaten :
**DE FR GB IT NL**

(56) Entgegenhaltungen :
CH-A- 487 336
DE-C- 518 572

(56) Entgegenhaltungen :
DE-C- 711 784
FR-A- 541 642
FR-A- 1 199 910
FR-A- 2 264 965
GB-A- 503 007
GB-A- 603 560
US-A- 1 821 999

(73) Patentinhaber : **GEBRÜDER SULZER
AKTIENGESELLSCHAFT
Zürcherstrasse 9
CH-8401 Winterthur (CH)**

(72) Erfinder : **von Niederhäusern, Franz
Technikumstrasse 72
CH-8400 Winterthur (CH)**

EP 0 340 156 B1

**EP 0 340 156 B1**

## Beschreibung

Die Erfindung betrifft eine Schmieranordnung für das Kreuzkopflager einer Zweitakt-Kolbenbrennkraftmaschine, mit den Merkmalen des Oberbegriffs des Anspruchs 1.

Bei einer als interner Stand der Technik bekannten Anordnung dieser Art mit einem Kreuzkopfzapfen als Lagerteil ist die Kolbenpumpe an der Schubstange befestigt. Zum Bewegen des Kolbens der Kolbenpumpe ist dieser mit einem zweiarmigen Hebel verbunden, an dem eine Stange angreift, die mit ihrem freien Ende am Kreuzkopfzapfen angelenkt ist. Zum Bewegen des Kolbens wird also die Schwenkbewegung der Schubstange relativ zum Kreuzkopfzapfen ausgenützt. Bei dieser Schmieranordnung ist nachteilig, dass die Kolbenpumpe für Wartungsarbeiten nicht gut zugänglich ist, weil sie sich immer relativ weit weg vom Maschinengehäuse befindet, das unter anderem die Schubstange und das Kreuzkopflager umgibt. Bedingt durch die Anordnung der Kolbenpumpe an der Schubstange fördert die Pumpe im Bereich des unteren Totpunktes des Arbeitskolbens der Brennkraftmaschine. In diesem Bereich ist die Belastung des Kreuzkopflagers jedoch nicht minimal, d.h. die Kolbenpumpe fördert während einer ungünstigen Zeitspanne, während der relativ hohe Förderdrücke, etwa 50 bar, notwendig sind, um ein hydrostatisches Abheben des Kreuzkopfzapfens vom Schubstangenlager zu erreichen.

Der Erfindung liegt die Aufgabe zugrunde, eine Schmieranordnung der eingangs genannten Art so zu verbessern, dass Wartungsarbeiten an der Kolbenpumpe einfacher als bisher ausgeführt werden können und die Schmierölzufuhr zum Kreuzkopflager beiniedrigen Drücken als bisher erfolgen kann.

Diese Aufgabe wird erfindungsgemäss durch die Merkmale des Kennzeichens des Anspruchs 1 gelöst.

Bei dieser neuen Schmieranordnung befindet sich also die Kolbenpumpe nicht mehr an der Schubstange, sondern am Maschinengehäuse, wodurch die Zugänglichkeit und damit das Ausführen von Wartungsarbeiten wesentlich erleichtert wird. Infolge der Anordnung der Kolbenpumpe am Maschinengehäuse wird es möglich, die Förderphase dieser Pumpe in den Bereich zu legen, in dem die Lagerbelastung am kleinsten ist. Dieser Bereich liegt etwa 60° vor dem oberen Totpunkt des Arbeitskolbens der Brennkraftmaschine. Wegen der minimalen Lagerbelastung ist der Förderdruck der Kolbenpumpe entsprechend niedriger als bei der bekannten Schmieranordnung. Der Förderdruck in der neuen Schmieranordnung beträgt etwa 3 bar. Trotz dieses niedrigen Förderdruckes liefert die Pumpe während der kleinsten Kreuzkopfbelastung eine relativ kleine Menge Schmieröl, die für ein hydrostatisches Abheben des Lagerteils vom Schubstangenlager ausreicht.

Aus der CH-PS 487336 ist eine Schmieranordnung für das Kreuzkopflager einer Hubkolbenbrennkraftmaschine bekannt, bei der eine Kolbenpumpe im Kreuzkopf angeordnet ist und eine Schmierölzufuhrleitung, über die das Schmieröl von der Kolbenpumpe angesaugt wird, als Kniehebelgelenk ausgebildet ist. Das Kniehebelgelenk ist zwischen einem festen Punkt der Maschine und dem Kreuzkopfzapfen angelenkt. Der Kolben der Kolbenpumpe wird von einem Hebelarm angetrieben, der exzentrisch am Anlenkpunkt des Kniehebelgelenkes am Kreuzkopfzapfen angeordnet ist und bei der Hin- und Herbewegung des Kreuzkopfes eine Schwenkbewegung ausführt. Auch bei dieser Schmieranordnung ist die Kolbenpumpe wegen ihrer Unterbringung im Kreuzkopf schlecht zugänglich.

Aus der US-PS 1821999 ist eine Kolbenpumpe für Schmieröl bekannt, die zwar am Maschinengehäuse angeordnet und daher gut zugänglich ist, die aber nicht Schmieröl über eine Zuführleitung zum Lagerspalt eines Kreuzkopfes fördert. Die Kolbenpumpe fördert vielmehr Schmieröl aus einem Vorratsraum in den Kurbelraum der Maschine.

Zwei Ausführungsbeispiele der Erfindung sind in der folgenden Beschreibung anhand der Zeichnung näher erläutert. Es zeigen :

Fig. 1     in schematischer Darstellung eine Schmieranordnung für ein Kreuzkopflager mit Kreuzkopfzapfen als Lagerteil,
Fig. 2     teilweise im Schnitt und teilweise in Ansicht die Kolbenpumpe der Schmieranordnung,
Fig. 3     einen Schnitt entsprechend der Linie III-III in Fig. 2,
Fig. 4     einen Schnitt entsprechend der Linie VI-VI in Fig. 2,
Fig. 5     eine gegenüber Fig. 2 abgewandelte Ausführungsform der Kolbenpumpe teilweise im Schnitt und teilweise in Ansicht und
Fig. 6     eine Anwendung der Schmieranordnung bei einem Kreuzkopflager mit Kugelkopf als Lagerteil.

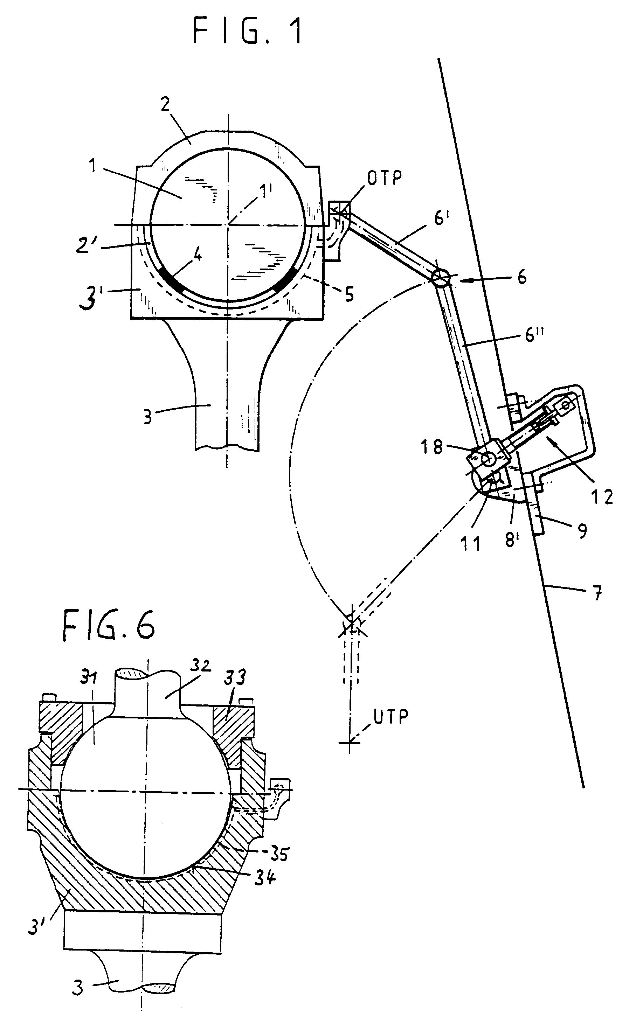

Gemäss Fig. 1 ist mit 1 der Kreuzkopfzapfen eines Kreuzkopflagers einer nicht näher dargestellten Zweitakt-Kolbenbrennkraftmaschine bezeichnet. Der Kreuzkopfzapfen 1 ist von einem Lagerdeckel 2 und einer Lagerschale 2′ umschlossen, die sich im Kopf 3′ am oberen Ende einer Schubstange 3 befindet. Das untere nicht dargestellte Ende der Schubstange 3 ist mit der Kurbelwelle der Brennkraftmaschine verbunden ist. In Fig. 1 nach oben erstreckt sich eine nicht dargestellte Kolbenstange, deren unteres Ende in bekannter Weise

2

mit dem Kreuzkopfzapfen 1 verbunden ist und an derem oberen Ende sich der Arbeitskolben der Brennkraftmaschine befindet.

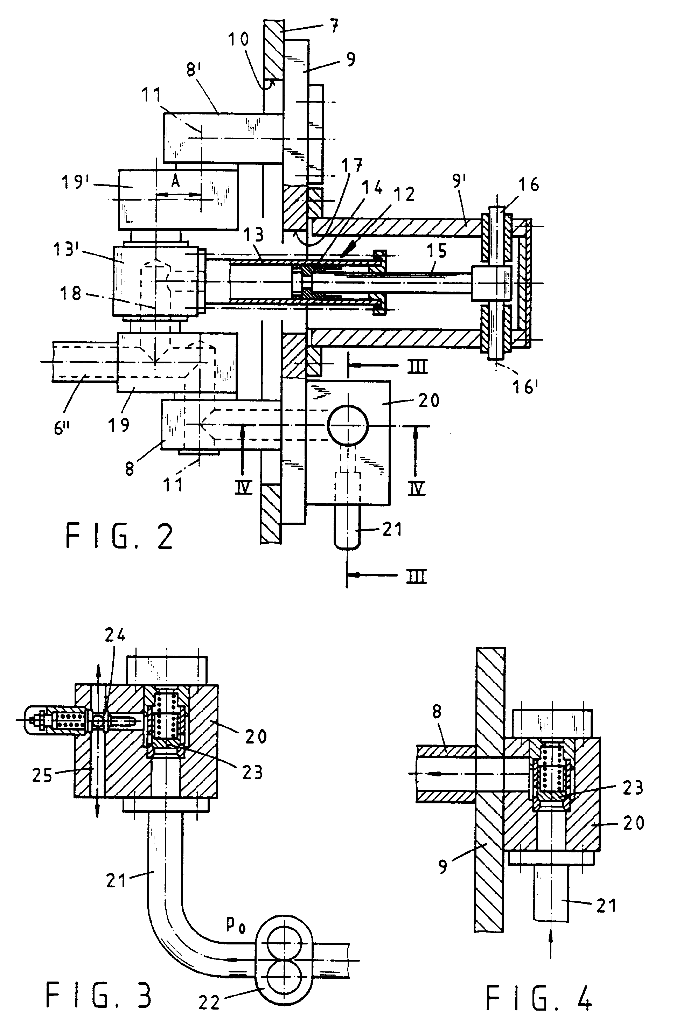

In der Lagerschale 2' befinden sich gegen den Kreuzkopfzapfen 1 offene Schmiertaschen 4, die über Schmierölnuten 5 mit Schmieröl versorgt werden. Zu diesem Zweck ist eine Schmierölzufuhrleitung 6 in Form eines Kniehebelgelenkes mit den beiden Armen 6' und 6" vorgesehen. Das freie Ende des Armes 6' ist am Schubstangenkopf 3' angelenkt, während der Arm 6" mit seinem freien Ende an der Innenseite des den Kreuzkopf umgebenden Maschinengehäuses 7 angelenkt ist, und zwar zwischen zwei Pratzen 8 und 8'(Fig. 2), von denen in Fig. 1 nur die letztgenannte sichtbar ist.

Gemäss Fig. 2 sind die beiden Pratzen 8 und 8' an einem flachen Deckel 9 befestigt, der seinerseits eine Inspektionsöffnung 10 im Gehäuse 7 überspannt und an diesem auf nicht dargestellte Weise lösbar befestigt ist. Der Arm 6" des Kniehebelgelenkes ist in den Pratzen 8 und 8' um eine Achse 11 schwenkbar, die parallel zur Achse 1' des Kreuzkopfzapfens 1 (Fig. 1) verläuft. In der Mitte zwischen den Pratzen 8 und 8' ist eine Kolbenpumpe 12 zum Fördern des Schmieröls für den Kreuzkopfzapfen 1 angebracht. Die Pumpe 12 besteht im wesentlichen aus einem Zylinder 13 und einem darin gleitenden Kolben 14, der über eine Kolbenstange 15 an einem Bolzen 16 angelenkt ist. Der Bolzen 16 ist in einem Gehäuseteil 9' gelagert, der mit dem Deckel 9 verbunden ist und der die Kolbenstange 15 sowie den nach aussen aus dem Gehäuse 7 herausragenden Abschnitt des Zylinders 13 umgibt. Dank dem gelenkigen Anschluss der Kolbenstange 15 am Bolzen 16 ist die Pumpe 12 in einem gewissen Bereich um die Bolzenachse 16' schwenkbar, wozu im Deckel 9 eine entsprechend grosse Oeffnung 17 ausgespart ist.

An dem der Kolbenstange 15 abgewendeten Ende des Zylinders 13 weist dieser einen Zylinderkopf 13' auf, der mit dem Arm 6" gelenkig verbunden ist, und zwar zwischen dem Anlenkpunkt dieses Armes an der Pratze 8 und dem gemeinsamen Gelenkpunkt der beiden Arme 6' und 6". Dabei existiert zwischen der Schwenkachse 11 des Armes 6" und der Achse 18 der gelenkigen Verbindung des Zylinders am Arm 6" ein Abstand A. Zur gelenkigen Verbindung des Zylinderkopfes 13' mit dem Arm 6" ist dieser im Bereich der Pratze 8 mit einem Kopfstück 19 versehen, das hohl ausgebildet ist, um den Durchfluss von Schmieröl zu ermöglichen. Zum gleichen Zweck ist die Pratze 8 hohl ausgebildet und steht mit ihrem in Fig. 2 rechten Ende mit einem Steuerblock 20 in Verbindung, der auf der anderen Seite oder Aussenseite des Deckels 9 befestigt ist. Ein dem Kopfstück 19 entsprechendes Zwischenstück 19' ist zwischen dem Zylinderkopf 13' und der Pratze 8' vorgesehen.

Der Steuerblock 20 ist an seiner Unterseite mit einer Zufuhrleitung 21 versehen, über die das von der Kolbenpumpe 12 angesaugte Schmieröl unter relativ niedrigem Druck mit Hilfe einer Zubringerpumpe 22 (Fig. 3) zugeführt wird. Gemäss Fig. 3 und 4 ist im Steuerblock 20 ein federbelastetes Rückschlagventil 23 angeordnet, das in Richtung auf die Zuführleitung 21 schliesst, d.h. wenn der Kolben 14 seinen Förderhub ausführt. Wie Fig. 3 weiter zeigt, ist neben dem Rückschlagventil 23 ein Druckbegrenzungsventil 24 vorgesehen, das unzulässig grosse Druckspitzen des Schmieröls während des Förderhubes des Kolbens 14 verhindert. Es öffnet also im Falle einer solchen Druckspitze und lässt Schmieröl über einen Kanal 25 in das Innere des Gehäuses 7 abströmen.

Die beschriebene Schmieranordnung funktioniert wie folgt. Ausgehend von der in Fig. 1 dargestellten Stellung der Bestandteile der Schmieranordnung befindet sich die Schubstange 3 im oberen Totpunkt OTP. Bei der dann folgenden Abwärtsbewegung der Schubstange 3 entsprechend dem Expansionshub des nicht gezeichneten Arbeitskolbens der Brennkraftmaschine wird der die Arme 6' und 6" verbindende Gelenkpunkt des Kniehebelgelenkes 6 auf der strichpunktierten Kreisbogenlinie abwärts bewegt bis in die gestrichelt dargestellte Stellung des Gelenkes, die dem unteren Totpunkt UTP der Schubstange 3 entspricht. Während der eben genannten Bewegung des Kniehebelgelenkes 6 bewegt sich auch die Achse 18 der gelenkigen Verbindung zwischen dem Zylinder 13 und dem Arm 6" auf einem Kreisbogen um die Achse 11 der Pratzen 8 und 8'. Da sich bei dieser Bewegung der Hubraum im Zylinder 13 vergrössert, wird über die Zufuhrleitung 21 Schmieröl von der Kolbenpumpe 12 angesaugt. Während der folgenden Aufwärtsbewegung der Schubstange 3 wandert die Gelenkverbindung der Arme 6' und 6" aus der in Fig. 1 gestrichelt gezeichneten Lage auf dem Kreisbogen wieder in die obere Lage. Zugleich bewegt sich auch die Achse 18 wieder in die obere Lage zurück, wobei sich der Hubraum des Zylinders 13 verkleinert und dementsprechend das zuvor angesaugte Schmieröl über das Kniehebelgelenk 6 in die Schmiertaschen 4 der Lagerschale 2' gefördert wird. Diese Beaufschlagung der Schmiertaschen geschieht also während einer Zeit, in der der Schmieröldruck in den Taschen niedriger ist als der Förderdruck der Kolbenpumpe 12 und in der auch die Belastung zwischen Kreuzkopfzapfen 1 und der Lagerschale 2' von den Gaskräften im Brennraum des Zylinders der Brennkraftmaschine und von den Massenkräften her niedrig ist. Das mit Hilfe der Kolbenpumpe 12 in die Schmiertaschen 4 geförderte Schmieröl hebt den Kreuzkopfzapfen 1 hydrostatisch von der Lagerschale 2' ab und die Fördermenge reicht aus, um während des anschliessenden Expansionshubes des Kolbens der Brennkraftmaschine eine ausreichende Schmierung zwischen Kreuzkopfzapfen 1 und Lagerschale 2' zu gewährleisten.

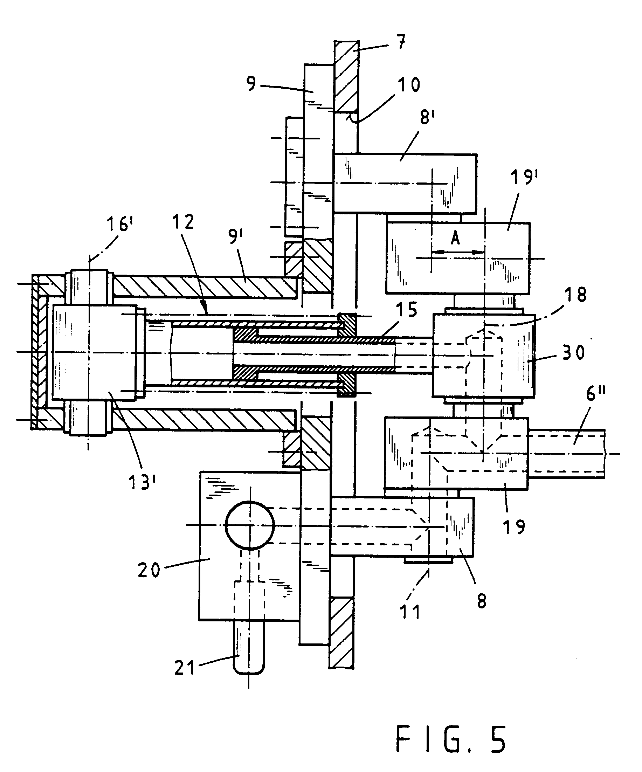

Bei dem Ausführungsbeispiel gemäss Fig. 5 ist die Kolbenpumpe 12 so angeordnet, dass die Kolbenstange 15 mit ihrem freien Ende mit Hilfe der Kopfstücke 19 und 19' an den Pratzen 8 und 8' gelenkig angeschlossen ist, während der Zylinderkopf 13' gelenkig im Gehäuseteil 9' des Deckels 9 gelagert ist. Die Kolbenstange 15 ist durchbohrt und an ihrem freien Ende mit einem hohlen Verbindungsstück 30 versehen, so dass eine ständige Verbindung zwischen dem Förderraum der Kolbenpumpe 12 einerseits und der Schmierölzufuhr im Steuerblock 20 sowie der zum Kreuzkopf führenden Schmierölleitung 6" besteht.

Der übrige Aufbau ist gleich dem gemäss Fig. 1 bis 4, was auch für die Funktionsweise des Ausführungsbeispiels nach Fig. 5 gilt.

Gemäss Fig. 6 ist anstelle eines Kreuzkopfzapfens ein Kugelkopf 31 als Lagerteil vorgesehen, der mit dem unteren Ende der Kolbenstange 32 fest verbunden ist. Im Schubstangenkopf 3' ist entsprechend eine hohlkugelige Lagerfläche 34 ausgebildet, die über Schmierölnuten 35 mit Schmieröl versorgt wird. Der Kugelkopf 31 wird mittels eines ringförmigen Lagerdeckels 33 am Schubstangenkopf 3' gehalten. Der Anschluss des Kniehebelgelenkes am Schubstangenkopf 3' entspricht demjenigen nach Fig. 1, während die Schmierölpumpe entsprechend Fig. 2 oder 5 ausgebildet und angeordnet sein kann.

## Patentansprüche

1. Schmieranordnung für das Kreuzkopflager einer Zweitakt-Kolbenbrennkraftmaschine, mit einer Kolbenpumpe (12), die mit ihrer Druckseite über eine Schmierölzufuhrleitung (6) mit einem mit der Kolbenstange verbundenen Lagerteil (1, 31) oder dem diesen Lagerteil umgebenden Schubstangenkopf (3') verbunden ist, wobei der Kolben (14) der abhängig von der Kreuzkopfbewegung angetriebenen Kolbenpumpe während einer Zeit, in der der Schmieröldruck im Lagerspalt zwischen dem Lagerteil (1, 31) und der umgebenen Lagerfläche des Schubstangenkopfes (3') wegen geringer werdender Belastung im Kreuzkopflager von den Gaskräften wie auch von den Massenkräften her niedriger ist als der Förderdruck der Kolbenpumpe (12), Schmieröl dem Lagerspalt zuführt, dadurch **gekennzeichnet**, dass die Kolbenpumpe (12) von aussen zugänglich am Maschinengehäuse (7) angeordnet ist, dass die Schmierölzuführleitung als zweiarmiges Kniehebelgelenk (6) ausgebildet ist, dessen einer Arm (6') mit seinem freien Ende am Lagerteil (1, 31) bzw. am Schubstangenkopf (3') und dessen anderer Arm (6") mit seinem freien Ende um eine erste Achse (11) schwenkbar am Maschinengehäuse (7) angelenkt ist, und dass der Kolben (14) der Kolbenpumpe (12) oder der den Kolben (14) umgebende Zylinder (13) der Kolbenpumpe (12) gelenkig mit dem Maschinengehäuse (7) und der den Kolben umgebende Zylinder der Kolbenpumpe bzw. der Kolben der Kolbenpumpe mit dem am Maschinengehäuse (7) angelenkten Arm (6") des Kniehebelgelenkes um eine zweite Achse (18) schwenkbar gelenkig verbunden ist, wobei zwischen der ersten (11) und der zweiten Achse (18) ein Abstand (A) besteht.

2. Anordnung nach Anspruch 1, dadurch gekennzeichnet, dass die gelenkige Verbindung des Kolbens (14) oder des den Kolben umgebenden Zylinders (13) mit dem Maschinengehäuse (7) sich in einem gegenüber diesem Gehäuse nach aussen ragenden, lösbar befestigten Deckel (9) befindet, der eine Zugangsöffnung (10) im Maschinengehäuse (7) überspannt.

3. Anordnung nach Anspruch 2, dadurch gekennzeichnet, dass sich an dem Deckel (9) auch die gelenkige Verbindung des anderen Arms (6") des Kniehebelgelenkes (6) mit dem Maschinengehäuse (7) sowie die gelenkige Verbindung des den Kolben (14) umgebenden Zylinders (13) oder des Kolbens der Kolbenpumpe (12) mit dem anderen Arm (6") des Kniehebelgelenkes befinden.

4. Anordnung nach Anspruch 2 oder 3, dadurch gekennzeichnet, dass an der Aussenseite des Deckels (9) ein Steuerblock (20) angeordnet ist, der ein zur Kolbenpumpe (12) gehörendes Saugventil (23) und ein den Förderdruck der Kolbenpumpe begrenzendes Ueberströmventil (24) aufweist.

5. Anordnung nach einem der Ansprüche 1 bis 4, dadurch gekennzeichnet, dass der Lagerteil (31) als Kugelkopf ausgebildet ist.

## Claims

1. A lubricating arrangement for the crosshead bearing of a two-stroke internal combustion engine, comprising a piston pump (12), the delivery side of which is connected via a lubricating oil supply conduit (6) either to a bearing part (1, 31) connected to the piston rod or to the connecting rod head (3') surrounding said bearing part, the piston (14) of the piston pump driven independently of the crosshead movement supplying lubricating oil to the bearing gap between the bearing part (1, 31) and the surrounding bearing surface of the connecting rod head (3') during a period in which the lubricating oil pressure in said bearing gap is less — because of the decreasing gas force loading in the crosshead bearing and because of the inertia forces — than the delivery pressure of the piston pump (12), characterised in that the piston pump (12) is disposed on the engine housing (7) so as to be accessible from outside, in that the lubricating oil supply conduit is in the form of a two-armed toggle lever joint (6), one arm (6') of which is articulated by its free end on the bearing part (1, 31) or on the connecting head (3') while its other arm (6″) is articulated by its free end on the engine housing (7) so as to pivot about a first axis (11), and in that the piston (14) of the piston pump (12) or the cylinder (13) of the piston pump (12) surrounding the piston (14) is pivotally connected to the engine housing (7) and the piston pump cylinder surrounding the piston or the piston pump piston is pivotally connected, so as to pivot about a second axis (18), to the toggle lever joint arm (6″) articulated on the engine housing (7), there being a distance (A) between the first axis (11) and the second axis (18).

2. An arrangement according to claim 1, characterised in that the pivotal connection of the piston (14) or of the cylinder (13) surrounding the piston to the engine housing (7) is situated in a releasably secured cover (9) which projects outwardly from the housing and which covers an access opening (10) in the engine housing (7).

3. An arrangement according to claim 2, characterised in that the pivotal connection of the other arm (6″) of the toggle lever joint (6) to the engine housing (7) and the pivotal connection of the cylinder (13) surrounding the piston (14) or of the piston of the piston pump (12) to the other arm (6″) ot the toggle lever joint are also situated on the cover (9).

4. An arrangement according to claim 2 or 3, characterised in that a control block (20) is provided on the outside of the cover (9) and comprises an intake valve (23) belonging to the piston pump (12) and a relief valve (24) which limits the piston pump delivery pressure.

5. An arrangement according to any one of claims 1 to 4, characterised in that the bearing part (31) is constructed in the form of a ball head.


**Revendications**

1. Dispositif de lubrification du coussinet de la crosse de piston d'un moteur à combustion interne à deux temps, comprenant une pompe à piston (12) dont le refoulement est relié par un conduit (6) d'arrivée d'huile de lubrification à un élément d'appui (1, 31), qui est relié à la tige du piston, ou à la tête (3') de la bielle qui entoure cet élément d'appui, le piston (14) de la pompe commandée en fonction du mouvement de la crosse envoyant de l'huile de lubrification dans le jeu du coussinet pendant la période au cours de laquelle la pression d'huile de lubrification régnant dans le jeu du coussinet entre l'élément d'appui (1, 31) et la surface du coussinet de la tête (3') de la bielle qui entoure cet élément est plus faible que la pression de refoulement de la pompe à piston (12) en raison de la décroissance de la charge produite sur le coussinet de la crosse par les forces des gaz ainsi que par les forces d'inertie, caractérisé en ce que la pompe à piston (12) est disposée sur le carter (7) du moteur de manière à être accessible de l'extérieur, en ce que le conduit d'arrivée d'huile de lubrification est conformé en articulation à genouillère (6) à deux bras dont l'extrémité libre de l'un des bras (6') est articulée sur l'élément d'appui (1, 31) ou sur la tête (3') de la bielle et dont l'extrémité libre de l'autre bras (6″) est articulée sur le carter (7) du moteur de manière à pouvoir osciller autour d'un premier axe (11), et en ce que le piston (14) de la pompe (12) ou le cylindre (13) de la pompe (12) qui entoure le piston (14) est relié par articulation au carter (7) du moteur et le cylindre de la pompe qui entoure le piston ou le piston de la pompe est relié par articulation au bras (6″) de l'articulation à genouillère qui est articulé sur le carter (7) du moteur de manière à pouvoir osciller autour d'un second axe (18), une distance (A) séparant le premier axe (11) du second (18).

2. Dispositif selon la revendication 1, caractérisé en ce que la liaison par articulation du piston (14) ou du cylindre (13) entourant le piston au carter (7) du moteur se trouve dans un couvercle (9) qui ressort à l'extérieur de ce carter, qui est fixé de manière amovible et qui recouvre une ouverture (10) d'accès à l'intérieur du carter (7) du moteur.

3. Dispositif selon la revendication 2, caractérisé en ce que la liaison par articulation de l'autre bras (6″) de l'articulation à genouillère (6) au carter (7) du moteur ainsi que la liaison par articulation du cylindre (13) entourant le piston (14) ou du piston de la pompe (12) à l'autre bras (6″) de l'articulation à genouillère se trouvent aussi sur le couvercle (9).

4. Dispositif selon la revendication 2 ou 3, caractérisé en ce qu'un bloc de commande (20) disposé sur le côté extérieur du couvercle (9) est équipé d'une soupape d'aspiration (23) faisant partie de la pompe à piston (12) ainsi que d'une soupape de trop-plein (24) qui limite la pression de refoulement de la pompe à piston.

5. Dispositif selon l'une des revendications 1 à 4, caractérisé en ce que l'élément d'appui (31) est conformé en tête sphérique.

# F I G. 1

# FIG.6

F I G. 2

F I G. 3

F I G. 4

FIG. 5